# EUROPEAN PATENT APPLICATION

(11) **EP 1 316 257 A1**
(43) Date of publication of application: **04.06.2003**
(21) Application number: 02425720.6
(22) Date of filing: 25.11.2002
(51) Int. Cl.: A22C 17/00

(54) **An apparatus for boning cuts of meat**

(30) Priority: 30.11.2001 IT BO20010737
(71) Applicant: TE.M.A. Tecnologie Meccaniche Applicate S.n.c. di Bortolotti Ivano E C., 41057 Spilamberto (Modena) (IT)
(72) Inventor: Cavilli, Gianfranco, 41057 Spilamberto (Modena) (IT); Bortolotti, Ivano, 41057 Spilamberto (Modena) (IT)
(74) Representative: Lanzoni, Luciano

(57) **Abstract**

An apparatus for boning cuts (2) of meat is equipped with a cylindrical head (9) which rotates about an axis (A), with a first tubular element (12) and a second tubular element (13) inside the first, forming a passage for the bone (4) in the cut (2) of meat during its removal, by cutter blades (21) integral with the tubular elements (12, 13). The apparatus comprises a motor-driven pulley (23) which supports and rotationally drives the head (9) and which comprises, diametrically opposite relative to the tubular element (12), two wedge means, each consisting of a connecting block (32) integral with the pulley (23) and a slide (50) which is slidably engaged in guide slots (42) integral with the first tubular element (12). The connecting block (32) and slide (50) have surfaces (37, 55) angled relative to the axis (A) and complementing one another which, thanks to driving means (58, 59) operating on the slide (50), fix the head (9) to the pulley (23).

## Description

The present invention relates to an apparatus for boning cuts of meat, such as hams and similar cuts. There is a known apparatus of this type comprising gripper means that move along a vertical axis for holding one end of the bone to be removed from the cut of meat, and a head with rotary movement about said vertical axis and consisting of two tubular elements positioned one inside the other.

The aforementioned head supports a plurality of blades, designed to separate the meat from the bone, each of which is hinged at a first end to the outer tubular element and at the second end to a handle which is in turn hinged to the inner tubular element.

While the rotary movement is transmitted to the outer tubular element directly by a pulley, coaxial and integral with it, driven by motor means, the movement of the inner tubular element, rotatably supported by the outer tubular element, is driven by the above-mentioned motor means via differential gearing, which allows the two tubular elements to rotate relative to one another, so that the blades can oscillate about respective fulcrums, varying their position relative to the axis of rotation of the head.

This movement causes the blades to open and close like a diaphragm, guaranteeing constant adherence of their cutting edges to the surface of the bone as the cut of meat is lifted by the gripper means.

The motor-driven pulley, in turn rotatably supported by a supporting structure, also supports the rotary head.

Again as is known, the connection between the pulley and the outer tubular element is made using a bayonet coupling. More precisely, the inner cylindrical surface of the motor-driven pulley has a plurality of radial pins designed for insertion in substantially L-shaped slots made in the outer annular element.

The rotary head is mounted on the motor-driven pulley with a head axial movement upwards, followed by rotation of the outer annular element, so that each radial pin is inserted in a slot then moves to the end of the slot.

However, precision machining of the mechanical elements is not sufficient to guarantee that this connection is perfect during apparatus operation.

The stresses to which the elements, in particular the radial pins, are subjected as they perform their supporting and driving action, at the relatively high head rotation speeds and during some processing steps, mean that after relatively short periods of use unwanted clearances develop between the motor-driven pulley and the outer tubular element.

As a result of these clearances, the apparatus stops functioning correctly and, in particular, the blades do not continuously adhere to the bone, consequently damaging the blades and wasting material.

The aim of the present invention is to provide an apparatus for boning cuts of meat which has none of the disadvantages described with reference to the prior art.

Accordingly, the present invention provides an apparatus for boning cuts of meat comprising means for gripping a bone to be removed from the cut of meat and transferring it along a substantially vertical axis, a cylindrical head rotating about the axis and comprising a first tubular element and a second tubular element inside the first tubular element, said tubular elements internally forming a passage for the bone during its removal. There are cutting means integral with the tubular elements for separating the meat from the bone, a motor-driven pulley for supporting and driving the head with a rotary movement, means for fixing the pulley to the head, characterised in that the fixing means comprise wedge means.

The present invention is now described with reference to the accompanying drawings, which illustrate a preferred embodiment of the invention without limiting the scope of the inventive concept, and in which:
- Figure 1 is a schematic side view of an apparatus for boning cuts of meat;
- Figure 2 is an enlarged side view, with some parts cut away and others in cross-section, of part of the apparatus illustrated in Figure 1;
- Figure 3 is a perspective view of a detail of Figure 2;
- Figures 3a, 3b and 3c are perspective views of three details of Figure 3;
- Figure 4 is a top plan view, with some parts in cross-section and others cut away, of the detail of Figure 2.

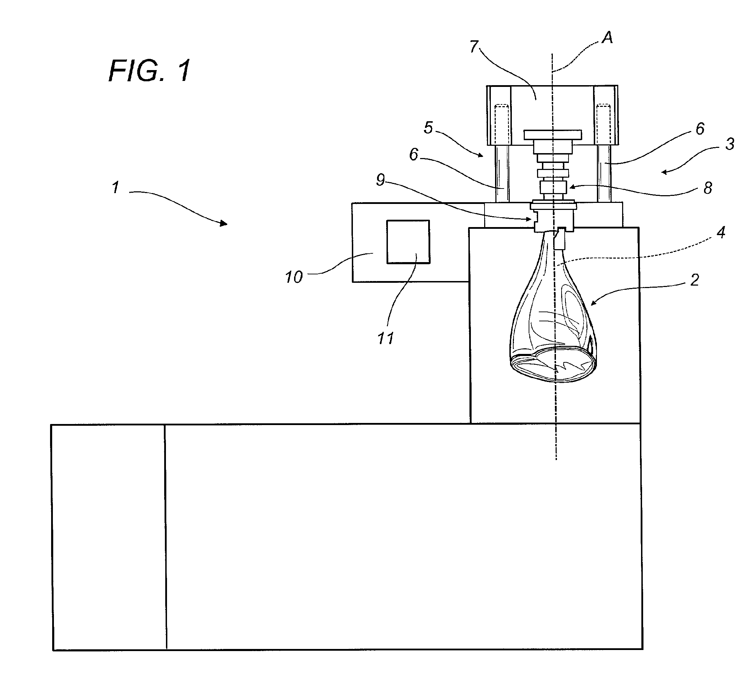

With reference to Figure 1, the numeral 1 denotes as a whole an apparatus for boning cuts 2 of meat, comprising a boning station, labelled 3, to which the cuts 2 of meat are fed and at which a bone 4 is separated from the cut 2 of meat.

The station 3 comprises a supporting structure 5 extending vertically along an axis A, the top end of which is equipped with a pair of vertical columns 6 on which a carriage 7 is slidably supported, driven by actuator means, of the known type and not illustrated, along the axis A.

Gripper and transfer means 8, also of the known type, are integral with the carriage 7, and are designed to hold the upper end of the bone 4 and to lift it along the axis A.

The station 3 is also fitted with a substantially cylindrical rotary head 9, supported, with the methods described below, by the supporting structure 5 under it and vertically aligned with the gripper and transfer means 8.

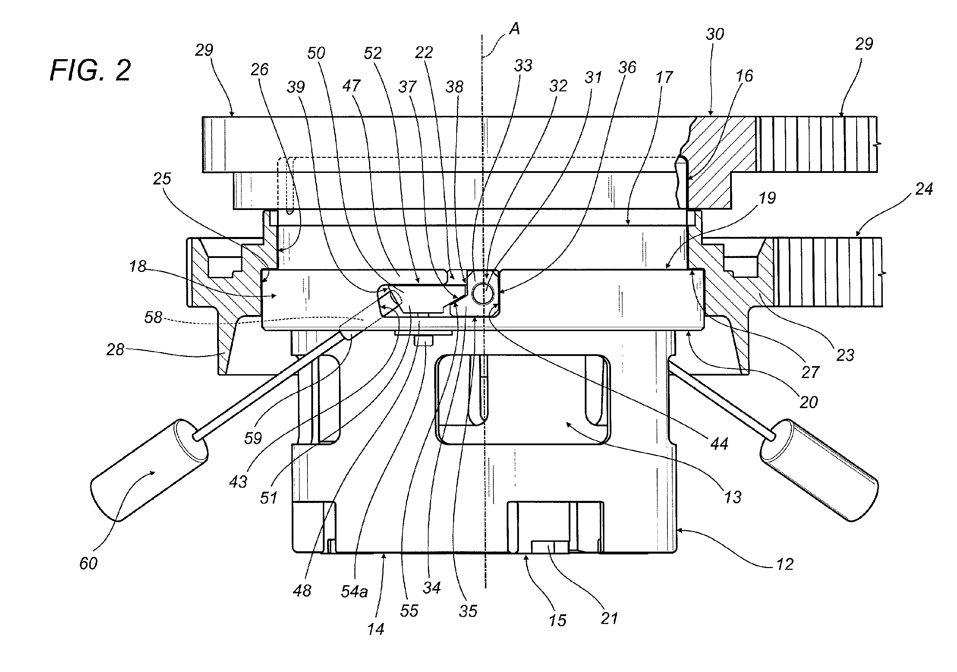

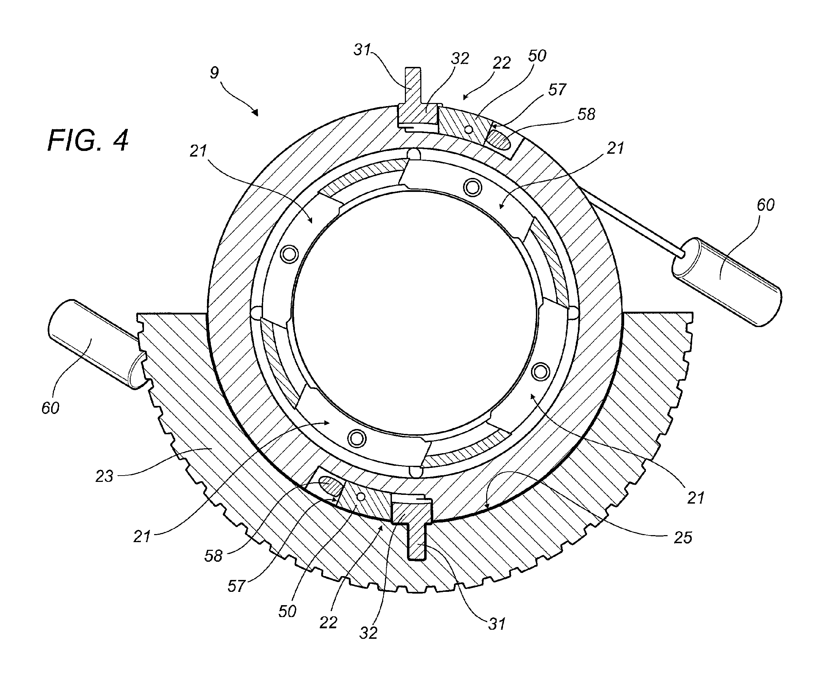

The supporting structure 5 is integral with a housing 10 for the drive means, of the known type and illustrated with a block 11, designed to transmit the rotary motion about the axis A, as described below, to the rotary head 9, which is axially hollow, see Figures 2, 3 and 4, so that the bone 4 can pass through it. The top of the bone is held pendulously by the gripper and transfer means 8.

With reference to Figures 2, 3 and 4, the rotary head 9 comprises a first tubular element 12 and a second tubular element 13, the second inside the first, its outer cylindrical surface being substantially in contact with the inner cylindrical surface of the first tubular element 12.

The outer tubular element 12 and the inner tubular element 13 have respective lower edges or bases 14 and 15, with a crown wheel shape, substantially coplanar with one another, whilst the inner tubular element 13 projects above the outer tubular element 12, its upper end having an annular projection 16 whose outer diameter is substantially the same as that of the outer tubular element 12 and which substantially rests on the upper edge 17 of the outer annular element 12.

The outer tubular element 12 therefore supports the inner tubular element 13 and, close to its upper end, has an annular projection 18 delimited at the top and bottom by circular rings labelled 19 and 20.

As described below, the tubular elements 12 and 13 can turn about the axis A, driven by the drive means 11, both together, and relative to one another.

The bottom of the head 9 supports a plurality of blades 21, four in the embodiment illustrated in the accompanying drawings, whose function is to separate the meat from the bone 4.

As is known, each blade 21 is hinged at its first end to the base 14 of the outer tubular element 12 and at its second end to a handle which is, in turn, hinged to the base 15 of the inner tubular element 13.

As is known, if the two tubular elements 12 and 13 rotate at different speeds, the above-mentioned type of connection allows the blades 21 to open and close like a diaphragm so as to keep the respective cutting edges continuously in contact with the surface of the bone 4.

The top end of the outer tubular element 12 is fitted and made integral by fixing means 22, described in detail below, with a pulley 23 supported in the known way not illustrated by the supporting structure 5, the outside having toothing which engages with a toothed belt 24 connected to the drive means 11.

The cylindrical inner surface of the pulley 23 is divided into two portions 25, 26 with different diameters, so that the upper portion 26 adheres to the upper end of the outer tubular element 12 and the lower portion 26 to the annular projection 18, whilst a circular coupling ring 27 connecting the portions 25, 26 makes contact with the circular ring 19 whose top is defined by the annular projection 18. The lower section of the pulley 23 has a bell-shaped edge extending downwards and labelled 28.

The drive means 11 are connected by a differential gearing, of the known type and not illustrated, to a second belt 29 directly looped around a second toothed pulley 30 and keyed on the annular projection 16 of the inner annular element 13.

According to a known operating cycle, the differential gearing is controlled by a sensor, which, depending on the variations in the dimensions of the bone 4, alters the instantaneous speed of rotation of the tubular elements 12 and 13, thus moving the blades 21 towards or away from the axis of rotation A of the head, keeping them constantly in contact with the surface of the bone 4.

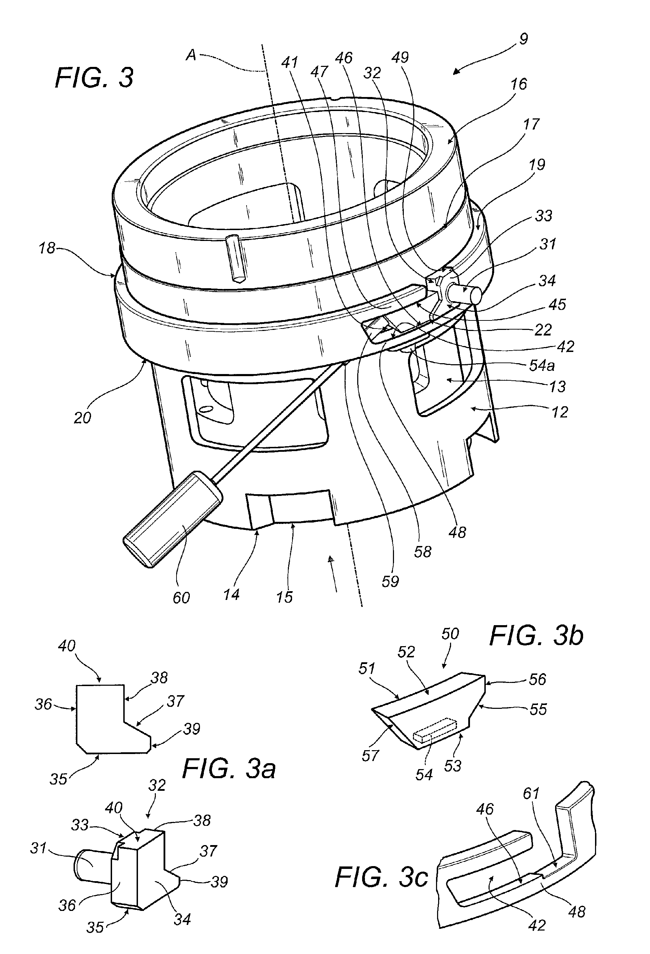

On the lower portion 25 of the inner cylindrical surface of the pulley 23, radial pins 31 are used to fit, in a diametrically opposite position to one another, two substantially L-shaped connecting blocks 32, each of which, as illustrated in Figure 3a, consists of a portion 33 substantially parallel with the axis A and a portion 34 transversal to the axis A.

The lower section of the transversal portion 34 has a flat face 35 at a right angle to an adjacent face, labelled 36, of the portion 33.

The top of the transversal portion 34 has an angled face 37, which together with a face 38 adjacent to it, parallel with the face 36 of the portion 33, forms an angle greater than 90°.

The two faces 35 and 37 and the two faces 36 and 38 are connected to one another by a face 39 and, respectively, by a face 40, parallel with the face 36 and the face 35 respectively.

Each connecting bock 32 is designed to be inserted in a guide means 41 consisting of a slot 42 open towards the outside and made in a substantially intermediate position, according to the axis A, between the upper and lower circular rings 19 and 20 of the outer tubular element 12.

Each slot 42, with depth substantially equal to the thickness of the annular projection 18, and shaped so that it extends transversally to the axis A, is delimited at the opposite longitudinal ends by faces 43 and 44 and at the top and bottom by two faces 45 and 46.

The latter, together with the circular ring 19 and the circular ring 20, form an upper wall 47 and a lower wall 48.

The upper wall 47 of each slot 42 has an opening 49 with dimensions which allow the head 9 to be fitted in the pulley 23, by inserting connecting blocks 32 in the slots 42, until the lower faces 35 of the connecting blocks 32 make contact with the lower faces 46 of the slots 42.

The slot 42 and the connecting block 32 are part of the above-mentioned fixing means 22, which also include a sliding block or slide 50 mounted in the slot 42 between the two upper 45 and lower 46 faces.

As is also illustrated in Figure 3b, the slide 50 consists of a block 51 whose thickness is substantially equal to the depth of the slot 42 and, in cross-section, has the shape of a trapezoid with the larger base, labelled 52, in contact with the upper face 45 and the smaller base, labelled 53, in contact with the face 46 of the slot 42. The smaller base 53 has guide means consisting of an extended slot 54 in which a top end of a screw 54a passing through the wall 48 is slidably inserted, to keep the slide 50 in the correct position in the slot 42, at the same time allowing it to perform a sliding movement.

At the end facing the connecting block 32, the slide 50 has a face 55 inclined in the opposite direction to the face 37 of the connecting block 32 and complementing the latter and a vertical chamfer 56. The angled face 55 and the chamfer 56 are designed to make contact respectively with the angled face 37 and the face 38 of the connecting block 32.

At the second end of the slide 50 there is a face 57 inclined in the opposite direction to the face 55, which engages with a bar 58 at a substantially normal angle to it, whose second, threaded end projects from the lower circular ring 20 and is fitted with a head 59 which can engage with a tool labelled 60.

From the above description it is clear that, following insertion of the connecting blocks 32 in the slots 42, after the head 9 has been lifted coaxially to the pulley 23, the head 9 is fixed to the pulley 23 by the slides 50, which, pushed by the bars 58, turned by the tools 60, are forced to insert themselves like a wedge between the angled faces 37 of the connecting blocks 32 and the lower faces 45 of the walls 47.

According to the above description, the fixing means 22 comprising the connecting block 32, the slide 50, the slot 42 and the locking and adjusting bar 58 constitute wedge-type fixing means 22, which not only allow extremely simple and rapid head 9 mounting in the pulley 23, but can also lock the head 9 to the pulley 23 in an absolutely secure fashion, without the possibility of clearances and risk of wear, thanks to the relatively extensive surfaces on which the weight of the head 9 is discharged and which are affected by the driving stresses during rotation of the pulley 23.

It is important to point out that, once the slide is fixed against the block 32, the through-screw 54a can be tightened so as to further secure the slide 50 in its position.

Figure 3c illustrates how the top of the wall 48 of each slot 42, opposite the opening 49, may have a recess 61 which, during head 9 assembly on the pulley 23, allows the connecting block 32 to be inserted in the slot 42, facilitating slide 50 sliding for reciprocal contact between the angled surfaces 37 of the block 32 and 55 of the slide 50. In any event, rotation of the head 59 of the bar 58 makes it extremely simple to adjust the pressure of the slide 50 on the connecting block 32.

## Claims

1. An apparatus for boning cuts (2) of meat comprising means (8) for gripping a bone (4) to be removed from the cut (2) of meat and transferring it along a substantially vertical axis (A), a cylindrical head (9) rotating about the axis (A) and comprising a first tubular element (12) and a second tubular element (13) inside the first tubular element (12), the tubular elements (12, 13) internally forming a passage for the bone (4) during its removal; cutting means (21) integral with the tubular elements (12, 13) for separating the meat from the bone (4), a motor-driven pulley (23) for supporting and rotationally driving the head (9), means (22) for fixing the pulley (23) to the head (9), the apparatus being **characterised in that** the fixing means (22) comprise wedge means.

2. The apparatus according to claim 1, **characterised in that** the fixing means (22) are inserted between the pulley (23) and the first tubular element (12).

3. The apparatus according to claim 1, **characterised in that** the wedge means comprise at least one connecting block (32) integral with the pulley (23) and a sliding block or slide (50) slidably engaged in guide means (41, 42) integral with the first tubular element (12), the connecting block (32) and slide (50) having respective surfaces (37, 55) angled relative to the axis (A) and complementing one another, means (58, 59) for driving the sliding block (50) so that, by reciprocal contact between the angled surfaces (37, 55), the head (9) is fixed to the pulley (23).

4. The apparatus according to claim 3, **characterised in that** the driving means (58, 59) comprise means (58) for locking the sliding block or slide (50).

5. The apparatus according to claim 3, **characterised in that** the guide means (41, 42) comprise a slot (42) made in the first annular element (12) and formed by two walls (47, 48) extending substantially transversally to the axis (A).

6. The apparatus according to claim 5, **characterised in that** the slot (42) has a seat designed to receive the connecting block (32) through an opening (49) in one of the walls (47, 48).

7. The apparatus according to any of the foregoing claims from 3 to 6, **characterised in that** the sliding block or slide (50) is slidably engaged with one of the two walls (47, 48) of the slot (42) by guide means (54, 54a).

8. The apparatus according to any of the foregoing claims from 1 to 7, **characterised in that** it comprises two fixing means (22), diametrically opposite relative to the first tubular element (12).
